# EUROPÄISCHE PATENTSCHRIFT

(11) **EP 1 982 553 B1**
(45) Veröffentlichungstag und Bekanntmachung des Hinweises auf die Patenterteilung: **22.01.2014**
(21) Anmeldenummer: 07711476.7
(22) Anmeldetag: 09.02.2007
(51) Int. Cl.: H04W 68/00, H04W 52/02

(54) **VERFAHREN ZUR DURCHFÜHRUNG EINES PAGINGS IN EINEM ZELLULAREN MOBILKOMMUNIKATIONSSYSTEM**
METHOD FOR CARRYING OUT PAGING IN A CELLULAR MOBILE COMMUNICATION SYSTEM
PROCÉDÉ DE MISE EN OEUVRE D'UNE RADIOMESSAGERIE DANS UN SYSTÈME DE COMMUNICATION MOBILE CELLULAIRE

(30) Priorität: 10.02.2006 DE 102006006485
(43) Veröffentlichungstag der Anmeldung: 22.10.2008
(73) Patentinhaber: Deutsche Telekom AG, 53113 Bonn (DE)
(72) Erfinder: JACOBSOHN, Dieter, 53229 Bonn (DE); NENNER, Karl-Heinz, 53332 Bornheim (DE)
(74) Vertreter: Riebling, Peter
(86) Internationale Anmeldenummer: PCT/EP2007/001104
(87) Internationale Veröffentlichungsnummer: WO 2007/090657

(56) Entgegenhaltungen:
- US-A1- 2004 071 112
- STEFANO M FACCIN RAJEEV KOODLI FRANCK LE JARI T MALINEN RENE PURNADI: "Dormant Mode Handover Support in Mobile Networks" IETF STANDARD-WORKING-DRAFT, INTERNET ENGINEERING TASK FORCE, IETF, CH, Nr. 1, November 2001 (2001-11), XP015031155 ISSN: 0000-0004
- PERKINS C E ET AL: "Optimized smooth handoffs in Mobile IP" PROCEEDINGS IEEE INTERNATIONAL SYMPOSIUM ON COMPUTERS AND COMMUNICATIONS, 6. Juli 1999 (1999-07-06), Seiten 340-346, XP002902009

## Beschreibung

Die Erfindung betrifft ein Verfahren zur Durchführung eines Pagings in einem zellularen Mobilkommunikationssystem. Das Paging wird vom Mobilkommunikationssystem zur Bestimmung des Aufenthaltsortes eines Mobilkommunikationsendgeräts durchgeführt.

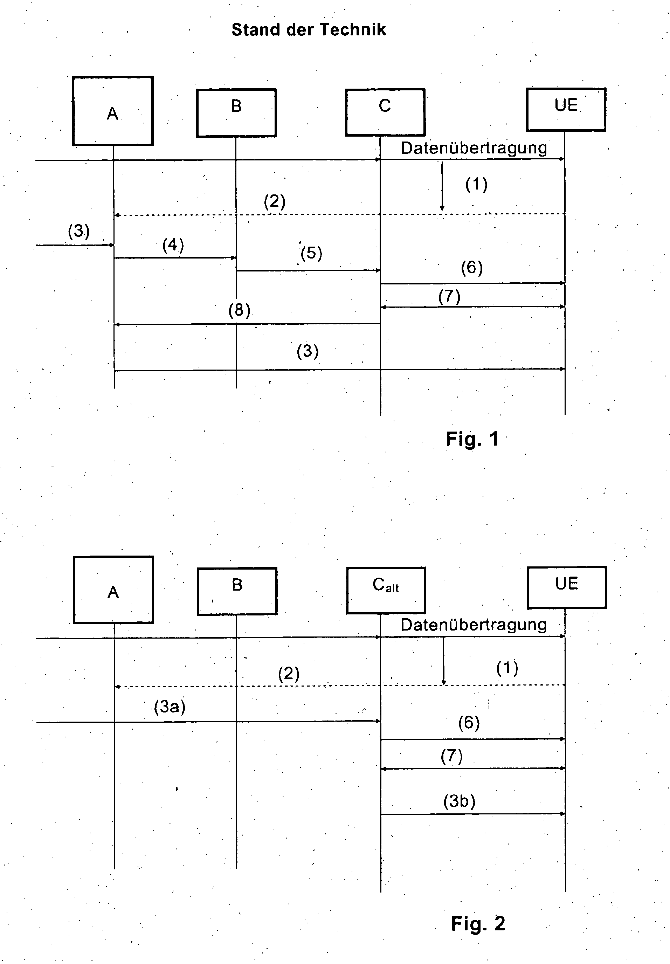

Gegenwärtig verwendetes Verfahren, Figur 1:
Ein mobiles Endgerät (User Equipment (UE)) befindet sich in einer Funkzelle eines Mobilkommunikationssystems und ist für zu übertragende Daten erreichbar. Erfolgt für eine gewisse Zeit keine Datenübertragung wird das Endgerät UE in einen Ruhezustand (Idle) gebracht, in dem eine Datenübertragung nicht mehr möglich ist, (1) Der Ruhezustand wird an das Mobilkommunikationsnetz signalisiert, (2). Die Endgeräte UEs können im Ruhezustand ihren Standort und damit auch die bevorzugte Funkzelle ("Serving Cell") wechseln, ohne dass eine Information hierüber an das Kommunikationsnetz erfolgt.

Um wieder Daten an dieses Endgerät UE übertragen zu können, muss das Endgerät UE vom Ruhezustand in einen Aktivzustand gebracht werden. Insbesondere muss auch die aktuelle "Serving Cell" ermittelt werden, also die Funkzelle, in deren Versorgungsbereich sich das Endgerät befindet Dafur wird ein Funkruf- "Paging-" Mechanismus benutzt.

In der bekannten Lösung wird dieses "Paging" wie in Figur 1 dargestellt durchgeführt.

Befindet sich das Endgerät UE im Ruhezustand und stehen bei einer Datenübertragungseinrichtung A des Kommunikationsnetzes neue Daten für eine Übertragung zum Endgerät an, (3), so initiiert die Datenübertragungseinrichtung A eine Paginganfrage in einem vorgegebenen Pagingareal in Form eines "Area Paging Request" an eine Mobilitätssteuereinrichtung B, (4). Das Pagingareal umfasst ein bestimmtes (vermutetes) Aufenthaltsgebiet des Endgeräts, kann aber auch auf das gesamte Mobilkommunikationsnetz ausgedehnt werden. Die Mobilitätssteuereinrichtung B wiederum initiiert funkzellenbezogene Paginganfragen "Cell Paging Requests" an alle ihr zugeordneten Funkübertragungseinrichtungen C im Pagingareal, (5). Die Funkübertragungseinrichtungen C initiieren jeweils eine Funkpagingnachricht "Radio Paging", die von allen in deren jeweiliger Reichweite befindlichen Endgeräten UE empfangen werden kann, (6). Das in der Funkpagingnachricht "Radio Paging" adressierte Endgerät UE meldet sich bei derjenigen Funkübertragungseinrichtung C, die aktuell die bevorzugte Funkzelle "Serving Cell" ist, wobei die Funkübertragungseinrichtung C dem Endgerät entsprechende Funkübertragungsressourcen zuweist, "Resource Assignment", (7). Die Funkübertragungseinrichtung C teilt der Datenübertragungseinrichtung A den Standort der Endgerätes UE mit, mittels einer Nachricht "Cell Paging Response", (8). Jetzt können die neuen Daten von der Datenübertragungseinrichtung A zum Endgerät UE übertragen werden, (9).

Beispiele für bekannte Datenübertragungseinrichtungen sind Serving GPRS Support Node SGSN, User Plane Entity UPE und Packet Data Gateway PDG. Beispiele für bekannte Mobilitätssteuereinrichtungen sind zum Beispiel Mobility Management Entity MME, und Serving GPRS Support Node.

US 2004/0071112 A1 offenbart ein Verfahren zur Durchführung eines Pagings in einem zellularen Mobilkommunikationssystem, wobei in einer ersten Funkzelle des Mobilkommunikationssystems ein Endgerät betrieben wird, das sich in einem Ruhezustand befindet, wobei in einer Datenübertragungseinrichtung des Mobilkommunikationssystems Daten anstehen, die an das Endgerät zu übermitteln sind, wobei die Daten unmittelbar an eine die erste Funkzelle mit Funksignalen versorgende Funkübertragungseinrichtung übermittelt werden, und von der Funkübertragungseinrichtung ein Paging an das Endgerät durchgeführt und/oder initiiert wird.

Es ist die Aufgabe der Erfindung, das oben beschriebene Pagingverfahren zu vereinfachen und effektiver zu gestalten.

Diese Aufgabe wird erfindungsgemäß durch ein Verfahren gemäß dem Anspruch 1 gelöst.

Bevorzugte Ausgestaltungen der Erfindung sowie weitere vorteilhafte Merkmale der Erfindung sind in den Unteransprüchen angegeben.

Bei der Durchführung eines Pagings in einem zellularen Mobilkommunikationssystem wird in einer ersten Funkzelle des Mobilkommunikationssystems ein Endgerät betrieben, das sich in einem Ruhezustand befindet, wobei in einer Datenübertragungseinrichtung des Mobilkommunikationssystems Daten anstehen, die an das Endgerät zu übermitteln sind.

Das Verfahren zeichnet sich dadurch aus, dass die Daten zunächst unmittelbar an eine die erste Funkzelle mit Funksignalen versorgende Funkübertragungseinrichtung übermittelt werden, und von der Funkübertragungseinrichtung ein Paging an das Endgerät durchgeführt und/oder initiiert wird.

Je nachdem, ob das Endgerät während des Ruhezustands in der bisherigen Funkzelle bleibt oder nicht, können die Daten von der Funkübertragungseinrichtung direkt an das Endgerat übertragen werden oder es muss von der Funkübertragungseinrichtung ein Paging in anderen Funkzellen initiiert werden, so dass die Daten von der Datenübertragungseinrichtung über eine andere Funkübertragungseinrichtung an das Endgerät übertragen werden können.

Das erfindungsgemäße Verfahren beinhaltet einen alternativen Vorschlag zum "Paging" in einem Mobilfunksystem. Durch Mmimierung der erforderlichen Signalisierung werden ein schnellerer Verbindungsaufbau und eine höhere Effektivität im Netzwerk erreicht.
Figur 1 beschreibt die Signalisierung bei einem bisher verwendeten Pagingverfahren nach dem Stand der Technik.
Figur 2 beschreibt die Signalisierung gemäß einer ersten Ausgestaltung des erfindungsgemäßen Pagingverfahrens
Figur 3 beschreibt die Signalisierung gemäß einer zweiten Ausgestaltung des erfindungsgemäßen Pagingverfahrens.

Der Ausgangszustand ist identisch zu dem der bekannten Losung, beschrieben im Zusammenhang mit Figur 1. Ein Endgerat (User Equipment (UE)) befindet sich in einer Funkzelle, auch bezeichnet als "die selbe" Funkzelle oder "erste" Funkzelle, und ist für zu ubertragende Daten erreichbar. Aufgrund von Inaktivität der Datenübertragung wird das Endgerät UE in einen Ruhezustand (Idle) gebracht, wobei keine Datenübertragung mehr möglich ist und das Endgerät ohne Benachrichtigung des Netzes die bevorzugte Funkzelle "Serving Cell" wechseln kann, (1). Um wieder Daten an dieses Endgerät UE senden zu können, muss das Endgerät UE in einen Aktivzustand gebracht werden und die aktuelle bevorzugte Funkzelle "Serving Cell" ermittelt werden. Dafür wird ein "Paging" Mechanismus benutzt

Figur 2 zeigt die erfindungsgemäß optimierte Lösung für den Fall, dass sich das Endgerät UE immer noch in derselben Funkversorgungszelle wie vor dem Ruhezustand befindet

Da die Datenübertragungseinrichtung A davon ausgeht, dass sich das Endgerät immer noch in der selben Funkzelle befindet versucht sie - im Gegensatz zur bisher bekannten Lösung - weiterhin Daten an das Endgerät UE über die zuletzt bekannte Funkübertragungseinrichtung Cₐₗₜ, d.h. die beim Wechsel in den Ruhezustand aktuelle Funkzelle "Serving Cell" zu senden, (3a). Da aufgrund des Ruhezustands des Endgerates UE eine unmittelbare Datenübertragung seitens der Funkübertragungseinrichtung Cₐₗₜ nicht möglich ist, initiiert die Funkubertragungseinrichtung Cₐₗₜ ein Funkpaging "Radio Paging", (6). Das Endgerät UE ist immer noch in derselben Funkzelle erreichbar und die entsprechenden Funkübertragungsressourcen können wieder zugewiesen werden, (7), - jetzt können die Daten von der Funkübertragungseinrichtung Cₐₗₜ weiter zum Endgerät UE übertragen werden, (3b).

Eine Paginganfrage im Pagingareal "Area Paging Request" an die Mobilitätssteuereinrichtung B und eine nachfolgende funkzellenbezogene Paginganfrage "Cell Paging" in allen Funkzellen des Areals sind erfindungsgemäß nicht mehr erforderlich. Dies minimiert den erforderlichen Signalisierungsverkehr und ermöglicht einen schnelleren Verbindungsaufbau und eine höhere Effektivität im Netzwerk.

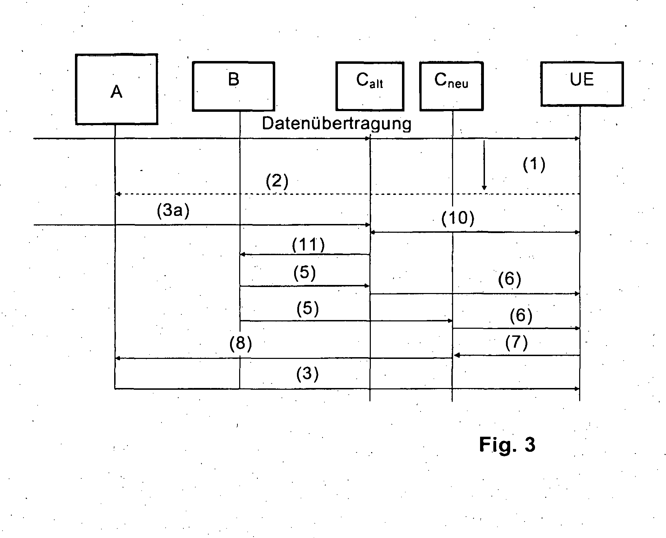

Figur 3 zeigt die erfindungsgemäß, optimierte Lösung für den Fall, dass sich das Endgerät UE nicht mehr in derselben, "ersten" Funkversorgungszelle wie vor dem Ruhezustand befindet sondern in einer anderen "zweiten" bzw. "neuen" Funkversorgungszelle.

Auch hier geht die Datenübertragungseinrichtung A davon aus, dass sich das Endgerät immer noch in der selben Funkzelle befindet und von der bisherigen, "alten" Funkübertragungseinrichtung Cₐₗₜ mit Funksignalen versorgt wird Die Datenübertragungseinrichtung versucht, Daten über die "alte" Funkübertragungseinrichtung Cₐₗₜ an das Endgerät UE zu senden, (3a) Die "alte" Funkübertragungseinrichtung Cₐₗₜ initiiert ein Funkpaging, was scheitert, da sich das Endgerät nicht mehr in der bisherigen Funkzelle aufhält, (10). Aufgrund des Scheiterns des Funkpagings und/oder anderer Entscheidungskriterien, ohne Funkpaging z B. Ablauf eines Timers, stellt die "alte" Funkübertragungseinrichtung Cₐₗₜ fest, dass das Endgerat UE nicht mehr in der ihr zugeordneten "alten" Funkzelle erreichbar ist und ein Paging im Pagingareal "Area Paging Request " und ein zellenbezogenes Paging "Cell Paging Request" erforderlich ist. Zur Initiierung des Paging-Vorgangs ubermittelt nun die "alte" Funkübertragungseinrichtung Cₐₗₜ unmittelbar, d.h. ohne Umweg über die Datenubertragungseinrichtung A, eine Pagingaufforderung im Pagingareal "Area Paging Request" an die Mobilitätssteuereinrichtung B, (11). Die Mobilitätssteuereinrichtung übermittelt darauf ordnungsgemäß eine Pagingnachricht: "Cell Paging Request", an alle zum Pagingareal gehörenden Funkübertragungseinrichtungen Cₙₑᵤ, Cₐₗₜ, usw., (5). Die Funkübertragungseinrichtungen Cₙₑᵤ, Cₐₗₜ, initiieren ein Funkpaging "Radio Paging", das von allen in ihrer jeweiligen Reichweite befindlichen Endgeräten UE empfangen werden kann, (6). Das im Funkpaging "Radio Paging" adressierte Endgerät UE, das sich im Bereich der "neuen" Funkübertragungseinrichtung Cₙₑᵤ aufhält, meldet sich bei derjenigen "neuen" Funkübertragungseinrichtung Cₙₑᵤ, die aktuell der versorgenden Funkzelle "Serving Cell" entspricht. Es erfolgt eine Funkressourcenzuweisung an das Endgerät, (7), wobei die Funkübertragungseinrichtung Cₙₑᵤ der Datenübertragungseinrichtung A den Standort der Endgerätes UE mitteilt, (8). Jetzt können neue Daten von der Datenübertragungseinrichtung A über die "neue" Funkübertragungseinrichtung zum Endgerät UE übertragen werden, (9).

Neu ist, dass die Paginganfrage im Pagingareal "Area Paging Request" direkt von der "alten" Funkübertragungseinrichtung Cₐₗₜ an die Mobilitätssteuereinrichtung B gerichtet wird, wenn festgestellt wird, dass das Endgerät nicht in der Funkzelle der "alten" Funkübertragungseinrichtung Cₐₗₜ erreichbar ist. Dies erspart bei der Signalisierung den Umweg über die Datenübertragungseinrichtung.

In Abhängigkeit von den o.g. Entscheidungskriterien der Funkübertragungseinrichtung Cₐₗₜ hinsichtlich der Erreichbarkeit eines Endgeräts UE kann ein (ggf. erneutes) Paging in dieser Funkübertragungseinrichtung Cₐₗₜ vermieden werden, wenn festgestellt wurde, dass das Endgerät nicht in der dieser Funkübertragungseinrichtung Cₐₗₜ zugeordneten Funkzelle erreichbar ist. Das heißt also, dass die Funkruf-Nachricht (5) und das damit verbundene Funkpaging im Bereich der "alten" Funkübertragungseinrichtung nicht wiederholt durchgeführt wird, da bereits zuvor im Verfahrensschritt (10) festgestellt wurde, dass das Endgerät sich nicht im Bereich dieser Funkübertragungseinrichtung aufhält.

Ferner kann ein Datenverlust von bereits an die "alte" Funkübertragungseinrichtung Cₐₗₜ übertragenen Daten vermieden werden, wenn während der "Paging"-Prozedur anfallende Daten, beispielsweise unter Einsatz von entsprechenden für Handover realisierten Funktion, in der "alten" Funkübertragungseinrichtung Cₐₗₜ zwischengespeichert werden und nach Wiederaufnahme der Datenübertragung an die "neue" Funkübertragungseinrichtung Cₙₑᵤ übermittelt werden.

### Liste der Bezugszeichen

- A: Datenübertragungseinrichtung
- B: Mobilitätssteuereinrichtung
- C: Funkübertragungseinrichtung
- Cₐₗₜ: bisher verwendete "alte" Funkübertragungseinrichtung
- Cₙₑᵤ: "neue" Funkübertragungseinrichtung
- UE: Endgerät (User Equipment)

In den Zeichnungen dargestellt Verfahrensschritte
- (1): Endgerät UE geht in den Ruhezustand
- (2): Signalisierung des Ruhezustands an die Netzkomponenten C, B, A
- (3): Übermitteln von neuen Daten für UE an A
- (3a): Übermitteln von neuen Daten für UE direkt an C
- (3b): Übermitteln von neuen Daten von C an UE
- (4): Paginganfrage im Pagingareal von A an B mittels Pagingnachricht: "Area Paging Request"
- (5): Paginganfrage von B an ein oder mehrere C in den Funkzellen des Pagingareals mittels Pagingnachricht: "Cell Paging Request"
- (6): Funkpaging von C an UE mittels Pagingnachricht: "Radio Paging"
- (7): Funkressourcenzuweisung C<->UE mittels einer "Resouce Assignment" Prozedur
- (8): Übermittlung des Standortes des UE von C an B und A mittels Pagingnachricht: "Cell Paging Response"
- (9): Übermittlung der neuen Daten von A an UE
- (10): Paging des UE durch Cₐₗₜ fehlgeschlagen
- (11): Paginganfrage im Pagingareal von Cₐₗₜ an B mittels Pagingnachricht: "Area Paging Request"

## Patentansprüche

1. Verfahren zur Durchführung eines Pagings in einem zellularen Mobilkommunikationssystem, wobei in einer ersten Funkzelle des Mobilkommunikationssystems ein Endgerät (UE) betrieben wird, das sich in einem Ruhezustand befindet, wobei in einer Datenübertragungseinrichtung (A) des Mobilkommunikationssystems Daten anstehen, die an das Endgerät zu übermitteln sind,
wobei
die Daten unmittelbar an eine die erste Funkzelle mit Funksignalen versorgende Funkübertragungseinrichtung (Cₐₗₜ) übermittelt werden, und zunächst nur von dieser Funkübertragungseinrichtung (Cₐₗₜ) ein Paging an das Endgerät (UE) durchgeführt und/oder initiiert wird, wobei
a) im Falle sich das Endgerät immer noch in derselben Funkversorgungszelle wie vor dem Ruhezustand befindet, das Endgerät nach dem Empfang der von der Funkübertragungseinrichtung (Cₐₗₜ) übermittelten Pagingnachricht vom Ruhezustand in einen Aktivzustand wechselt und die Daten von der Funkübertragungseinrichtung (Cₐₗₜ) empfängt, wobei
b) im Falle sich das Endgerät nicht mehr in derselben Funkversorgungszelle wie vor dem Ruhezustand befindet, die Funkübertragungseinrichtung (Cₐₗₜ) bei Nicht-Erreichbarkeit des Endgeräts eine Pagingaufforderung an eine Mobilitätssteuereinrichtung (B) übermittelt, wonach die Mobilitätssteuereinrichtung (B) eine Paginganfrage an alle Funkübertragungseinrichtungen (Cₐₗₜ, Cₙₑᵤ) eines vorgegebenen Pagingareals übermittelt, wonach die entsprechenden Funkübertragungseinrichtungen (Cₐₗₜ, Cₙₑᵤ) eine Pagingnachricht an das Endgerät übermitteln, wonach das Endgerät (UE) nach dem Empfang der Pagingnachricht vom Ruhezustand in einen Aktivzustand wechselt und um die Daten von der Datenübertragungseinrichtung (A) über eine die zweite Funkzelle versorgende zweite Funkübertragungseinrichtung (Cₙₑᵤ) empfängt, **gekennzeichnet dadurch, dass** bei Nicht-Erreichbarkeit des Endgerätes (C_{alt,} Cₙₑᵤ) in einer Funkzelle eine Übermittlung einer erneuten Pagingnachricht an die die Funkzelle versorgende Funkübertragungseinrichtung (Cₐₗₜ) nicht mehr erfolgt.

2. Verfahren nach Anspruch 1, **dadurch gekennzeichnet, dass** die bei der Pagingprozedur bereits an die Funkübertragungseinrichtung (Cₐₗₜ) übermittelten Daten zwischengespeichert werden und nach Wiederaufnahme der Datenübertragung an die zweite Funkübertragungseinrichtung (Cₙₑᵤ) übermittelt werden.

3. Pagingsystem in einem zellularen Mobilkommunikationssystem mit Einrichtungen zur Durchführung des Verfahrens gemäß den Ansprüchen 1 bis 2.

4. Pagingsystem nach Anspruch 3, **gekennzeichnet durch** eine Mobilitätssteuereinrichtung (B).

## Claims

1. Method for carrying out paging in a cellular mobile communications system, wherein a terminal (UE) which is in an idle state is operated in a first cell of the mobile communications system, wherein data which are to be transmitted to the terminal queue in a data transmission device (A) of the mobile communications system, wherein the data are transmitted directly to a radio transmission device (C_{old}) which serves the first cell with radio signals, and at first paging of the terminal (UE) is carried out and/or initiated only by this radio transmission device (C_{old}), wherein
(a) in the event that the terminal is still located in the same cell as before the idle state, after reception of the paging message transmitted by the radio transmission device (C_{old}) the terminal changes from the idle state to an active state and receives the data from the radio transmission device (C_{old}), wherein
b) in the event that the terminal is no longer located in the same cell as before the idle state, if the terminal is not within range the radio transmission device (C_{old}) transmits a paging request to a mobility control device (B), whereupon the mobility control device (B) transmits a paging request to all radio transmission devices (C_{old}, C_{new}) of a predetermined paging area, whereupon the corresponding radio transmission devices (C_{old}, C_{new}) transmit a paging message to the terminal, whereupon after reception of the paging message the terminal (UE) changes from the idle state to an active state and receives the data from the data transmission device (A) via a second radio transmission device (C_{new}) which serves the second cell, **characterised in that**, if the terminal (C_{old}, C_{new}) is not within range in a cell, transmission of a repeated paging message to the radio transmission device (C_{old}) which serves the cell is no longer effected.

2. Method according to claim 1, **characterised in that** the data already transmitted to the radio transmission device (C_{old}) during the paging procedure are stored temporarily and, after resumption of data transmission, transmitted to the second radio transmission device (C_{new}).

3. Paging system in a cellular mobile communications system having devices for carrying out the method according to claims 1 to 2.

4. Paging system according to claim 34, **characterised by** a mobility control device (B).

## Revendications

1. Procédé pour la mise en oeuvre d'une radiomessagerie dans un système de communication mobile cellulaire, étant précisé que dans une première cellule du système de communication mobile, un terminal (UE) qui se trouve dans un état de repos est commandé, que dans un dispositif de transfert de données (A) du système de communication mobile sont présentes des données qui doivent être transmises au terminal, que les données sont transmises directement à un dispositif de transfert radio (Cₐₗₜ) qui alimente la première cellule en signaux radioélectriques et qu'un appel de radiomessagerie vers le terminal (UE) n'est tout d'abord réalisé et/ou lancé que par ce dispositif de transfert radio (Cₐₗₜ), étant précisé
a) qu'au cas où le terminal se trouve encore dans la même cellule d'alimentation radio qu'avant l'état de repos, le terminal, après réception du message de radiomessagerie transmis par le dispositif de transfert radio (Cₐₗₜ), passe de l'état de repos à un état actif et reçoit les données du dispositif de transfert radio (Cₐₗₜ), et
b) qu'au cas où le terminal ne se trouve plus dans la même cellule d'alimentation radio qu'avant l'état de repos, le dispositif de transfert radio (Cₐₗₜ), si le terminal n'est pas accessible, transmet une invitation d'appel de radiomessagerie à un dispositif de commande de mobilité (B), après quoi le dispositif de commande de mobilité (B) transmet une demande d'appel de radiomessagerie à tous les dispositifs de transfert radio (Cₐₗₜ, Cₙₑᵤ) d'une zone de radiomessagerie prédéfinie, après quoi les dispositifs de transfert radio correspondants (Cₐₗₜ, Cₙₑᵤ) transmettent un message de radiomessagerie au terminal, après quoi le terminal (UE), après réception du message de radiomessagerie, passe de l'état de repos à un état actif et reçoit les données du dispositif de transfert de données (A) par l'intermédiaire d'un second dispositif de transfert radio (Cₙₑᵤ) qui alimente la seconde cellule,
**caractérisé en ce que** si le terminal (Cₐₗₜ, Cₙₑᵤ) n'est pas accessible dans une cellule, une transmission d'un nouveau message de radiomessagerie au dispositif de transfert radio (cₐₗₜ) qui alimente la cellule n'a plus lieu.

2. Procédé selon la revendication 1, **caractérisé en ce que** les données qui sont déjà transmises au dispositif de transfert radio (Cₐₗₜ) lors de la procédure de radiomessagerie sont mises en mémoire temporairement, et sont transmises après la reprise du transfert de données au second dispositif de transfert radio (Cₙₑᵤ).

3. Système de radiomessagerie dans un système de communication mobile cellulaire avec des dispositifs pour la mise en oeuvre du procédé selon les revendications 1 à 2.

4. Système de radiomessagerie selon la revendication 3, **caractérisé par** un dispositif de commande de mobilité (B).
